# EUROPEAN PATENT APPLICATION

(11) **EP 2 390 951 A1**
(43) Date of publication of application: **30.11.2011**
(21) Application number: 10290276.4
(22) Date of filing: 26.05.2010
(51) Int. Cl.: H01M 10/04, H01M 10/50, H01M 10/052, H01M 10/0585

(54) **Heat transfer module for battery cells and battery assembly therewith**

(71) Applicant: MANN+HUMMEL GmbH, 71638 Ludwigsburg (DE)
(72) Inventor: Champion, Arnaud, 53000 Laval (FR); Tremblay, Guy, 53000 Laval (FR); Denoe, Willy, 49480 St. Sylvain D'Anjou (FR)

(57) **Abstract**

The invention relates to a heat transfer module (3) for battery cells, comprising: a frame (4) of a plastics material having a supply conduit and an exhaust conduit (13b) for a heat transfer fluid, two heat transfer members (12a, 12b) for contacting a respective battery cell, the heat transfer members (12a, 12b) being sealingly attached to opposite faces of the frame (4), and at least one heat transfer channel (15) formed between the frame (4) and one of the heat transfer members (12b) for transporting the heat transfer fluid from the supply conduit to the exhaust conduit (13b). The invention also relates to a battery assembly comprising a plurality of such heat transfer modules (3).

## Description

### Technical Field

The subject invention generally relates to heat transfer modules for battery cells and to battery assemblies having a plurality of (rechargeable) battery cells, in particular for electric/hybrid vehicles having a cooling and/or heating system for providing heat transfer to the battery cells of the battery assembly.

### Background Art

A battery module having a plurality of heatsink assemblies with battery cells disposed therebetween is known from US 2009/0214941 A1. A plurality of rods extends through the heatsink assemblies to secure the heat sink assemblies and the cells with one another to form the battery module. The heatsink assemblies are formed from thermally conductive materials such as aluminum, copper and the like. The heatsink assemblies have thermal transfer edges (fin portions) extending beyond the edges of the cells, the-transfer edges being exposed to cooling and/or heating media, in particular in the form of fluids.

There remains an opportunity to improve upon the battery module of the prior art to increase the heat transfer between the heat transfer between the fluid and the battery cells, and also to provide a new battery assembly with improved packaging characteristics.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a heat transfer module for battery cells, comprising: a frame of a (thermo-) plastic material, the frame having a supply conduit and an exhaust conduit for a heat transfer fluid, two heat transfer members for contacting a respective battery cell, the heat transfer members being sealingly attached to opposite faces of the frame, and at least one heat transfer channel formed between the frame and one of the heat transfer members for transporting the heat transfer fluid from the supply conduit to the exhaust conduit.

A heat transfer module according to the invention typically comprises a frame of a plastics material produced e.g. by moulding. The heat transfer module comprises two opposite, generally flat faces, each for receiving an essentially flat battery cell. Each face has a circumferential, frame-like edge which serves as a lateral fixation for the received battery cell. A generally flat heat transfer member made of a thermally conductive material is sealingly attached to a respective face of the plastics frame, the thermally conductive material contacting a face of the battery cell when the iatter is received by the module. The heat transfer channel formed between the frame and the heat transfer member thus allows for efficient heat transport from/to the battery cell.

During operation of the module, a heat transfer fluid, typically water, enters through an opening formed in the supply conduit into a space between the heat transfer member and the frame, passes the heat transfer channel and leaves the heat transfer module via the exhaust conduit. Due to the sealing of the heat transfer members to the frame, the heat transfer fluid may only enter and leave the heat transfer module via the supply and exhaust conduits, respectively.

It will be appreciated that typically, a plurality of heat transfer modules of identical construction are used for providing heat transfer to/from a plurality of battery cells, each battery cell being accommodated between two adjacent heat transfer modules. Also, although the heat transfer modules may be used for heating up the cells, e.g. when the ambient temperature falls below 0° C, typically, the heat transfer modules are used for cooling the battery cells, e.g. during a recharging process.

In one embodiment, the frame comprises a generally flat face to which the heat transfer member is attached, the heat transfer channel being formed by a recess in the flat face of the frame being covered by the heat transfer member. Thus, according to the invention, the degree of freedom which is provided when designing the plastic frame (e.g. by mouiding) can be used for generating a heat transfer channel with a desired shape and geometry by forming a recess in the plastic frame which is sealed by the flat heat transfer member. Usually, the heat transfer channel is a curved channel, i.e. it does not connect the supply and exhaust conduits in a direct line, thus allowing for efficient heat exchange with the battery cells. Of course, two or more (parallel) heat transfer channels leading from the inlet (supply conduit) to the outlet (exhaust conduit) of the heat transfer module may also be provided. In particular, at least one heat transfer channel is typically provided on each of the opposite faces of the frame.

In one improvement, the heat transfer members are metal sheets. Metals are thermally conductive materials which may be produced and brought into a desired shape with little expense. For the present applications, thin metal sheets / plates with a thickness of e.g. 2 mm or less may be sufficient. Prominent examples of metals which may be used as heat transfer members include (but are not limited to) aluminum, copper and the like. Typically, the two heat transfer members are of identical geometry.

For providing a sealing attachment between the heat transfer members and the frame, it may be sufficient to glue the heat transfer members to the frame. Gluing may provide an efficient sealing, as both the heat transfer members and the frame typically comprise large flat areas which may be fixed to each other by gluing.

or in addition, a gasket may be used for providing sealing attachment of the heat transfer members to the frame. In particular, the gasket may be overmoulded on the frame and the heat transfer member, typically in a circumferential area thereof.

In another embodiment, the heat transfer module further comprises at least one sealing member for providing a sealing connection of the supply conduit and the exhaust conduit to respective conduits of further heat transfer modules. The sealing member allows for a sealing engagement of a plurality of conduits arranged in series, thus allowing the heat transfer fluid to be provided to a plurality of heat transfer modules without the risk of leakage into the area where the battery cells are located.

Typically, the sealing member is a gasket, in particular an o-ring. Instead of an o-ring, the gasket may be provided by overmoulding the plastic frame with an elastomer. This is particularly advantageous when a gasket for providing the sealing attachment of the heat transfer members to the frame is also provided by overmoulding, such that it becomes possible to produce both gaskets in a single overmoulding process.

In a further embodiment, the frame comprises at least one gap for providing an electrical connection to a battery cell which is received by the heat transfer module. It will be appreciated that the gap / opening is formed in a circumferential portion of the frame, namely at the frame-like edge which serves for lateral fixation of the cell. Typically, two gaps are provided for each battery cell, allowing to contact two electrodes of the cell having different polarity.

In one embodiment, the heat transfer module comprises at least two alignment channels for receiving fasteners, in particular rods, for interconnecting a plurality of heat transfer modules. The fasteners, e.g. rods, pass through the alignment channels of a plurality of identically shaped heat transfer modules and may be fixed at respective end plates of the stacked modules, thus securing the heat transfer modules and in an aligned position. Typically, the alignment channels extend essentially parallel to the supply and exhaust conduits. In particular when (metal) rods are used as fasteners, cylindrical inserts may be arranged in the alignment channels, serving as a bearing for the rods.

Another aspect of the invention relates to a battery assembly, comprising: a first end module having an entry port for a heat transfer fluid, a second end module having an exit port for the heat transfer fluid, a plurality of heat transfer modules as described above, and a plurality of battery cells arranged between the heat transfer members of adjacent heat transfer modules. It will be understood that the first and second end plates may also be devised as heat transfer modules, albeit with only a single heat transfer member sealingly attached to a frame of a plastics material. The battery assembly as described herein allows for a highly effective heat transfer to/from the battery cells accommodated therein, making use of the freedom of design which is provided when using plastic materials as a frame.

In one improvement, the battery assembly further comprises at least two fasteners, in particular two rods, for interconnecting the heat transfer modules and the end modules. The fasteners may comprise a threaded terminal portion which may be fixed at the outer surfaces of the end modules e.g. using screws. Thus, the heat transfer modules with the battery cells may be secured in a slightly compressed state, allowing to obtain good thermal contact between the heat transfer members and the battery cells.

Further features and advantages are stated in the following description of exemplary embodiments, with reference to the figures of the drawing, which shows significant details, and are defined by the claims. The individual features can be implemented individually by themselves, or several of them can be implemented in any desired combination

### Brief Description of the Drawings

Exemplary embodiments are shown in the diagrammatic drawings and are explained in the detailed description below. The following are shown:
Fig. 1 an embodiment of a battery assembly according to the invention which accommodates a plurality of battery cells,
Fig. 2 an exploded view of an end portion of the battery assembly of Fig. 1,
Fig. 3 a frame with a heat transfer channel for a heat transfer module,
Fig. 4 an exploded view of an embodiment of a heat transfer module according to the invention, and
Fig. 5 a sectional view of an exhaust conduit of a heat transfer module.

### Detailed Description

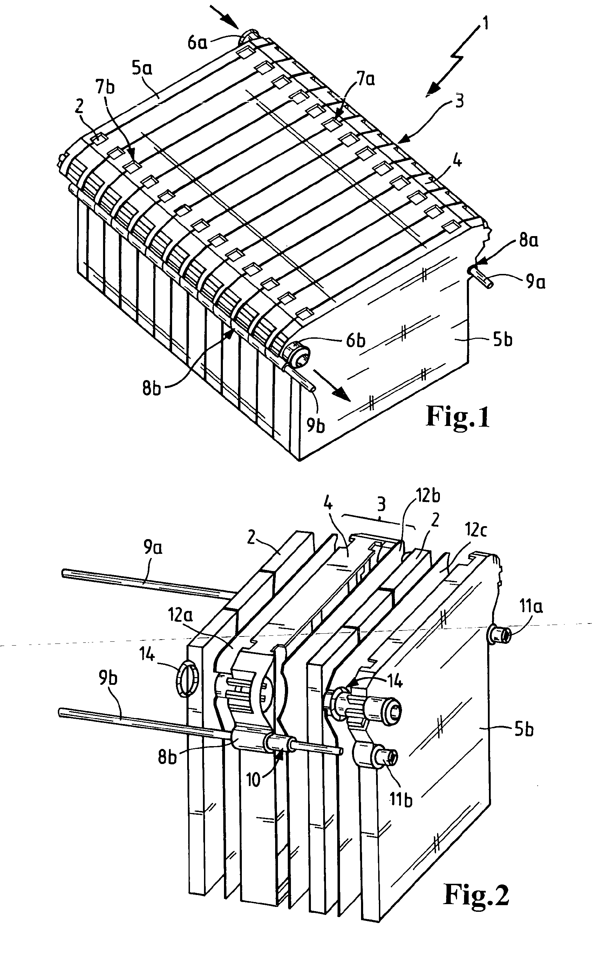

Fig. 1 and Fig. 2 show a battery assembly 1 for accommodating a plurality of battery cells 2 having an essentially prismatic / flat geometry (cf. Fig. 2). The battery assembly 1 has a plurality of heat transfer modules 3 arranged in series, each comprising a frame 4 of a (thermo-) plastic material in an essentially parallel orientation to the battery cells 2.

A first and second end module 5a, 5b are formed at terminal ends of the battery assembly 1. The first end module 5a has an entry port 6a for a heat transfer fluid, typically water, the second end module 5b has a corresponding exit port 6b for the heat transfer fluid which has passed through the battery assembly 1. Typically, the battery cells 2 are rechargeable cells, e.g. Lithium ion cells, which are heated up during the recharging process, such that the heat transfer fluid is used for cooling the battery cells 2. However, it will be understood that the heat transfer modules 3 may also be used for heating the battery cells 2, for instance when ambient temperatures fall below a certain value, e.g. below 0° C. As can also be gathered from Fig. 1, gaps 7a, 7b are formed at an upper portion of the frames 4, the gaps 7a, 7b allowing to provide an electrical connection to the battery cells 2, more precisely to electrodes formed on the battery cells 2.

For interconnecting the heat transfer modules 3, two alignment channels 8a, 8b are formed at opposite lateral edges of the frames 4 of the heat transfer modules 3. Each alignment channel 8a, 8b may receive a respective rod 9a, 9b which is used as a fastener for securing the plurality of heat transfer modules 3 together with the end modules 5a, 5b. As can be gathered from Fig. 2, inserts 10 may be placed into the alignment channels 8a, 8b, forming a bearing for the (metallic) rods 9a, 9b. In the present example, threaded end portions of the rods 9a, 9b are fixed to the end modules 5a, 5b by screws 11 a, 11 b. It will be understood that by fastening the screws 11 a, 11 b, a (small) compressive force may be applied to the assembly 1 for improving its rigidity.

As can be seen from Fig. 2, in addition to the plastic frame 4, the heat transfer module 3 has two heat transfer members in the form of metallic flat sheets 12a, 12b (e.g. of copper) which are attached to opposite faces of the frame 4 and are brought into direct contact with a respective battery cell 2. The end module 5b also has a metallic sheet 12c attached to a plastic frame thereof, the metallic sheet 12c being brought into contact with a battery cell 2 which is disposed directly adjacent thereto.

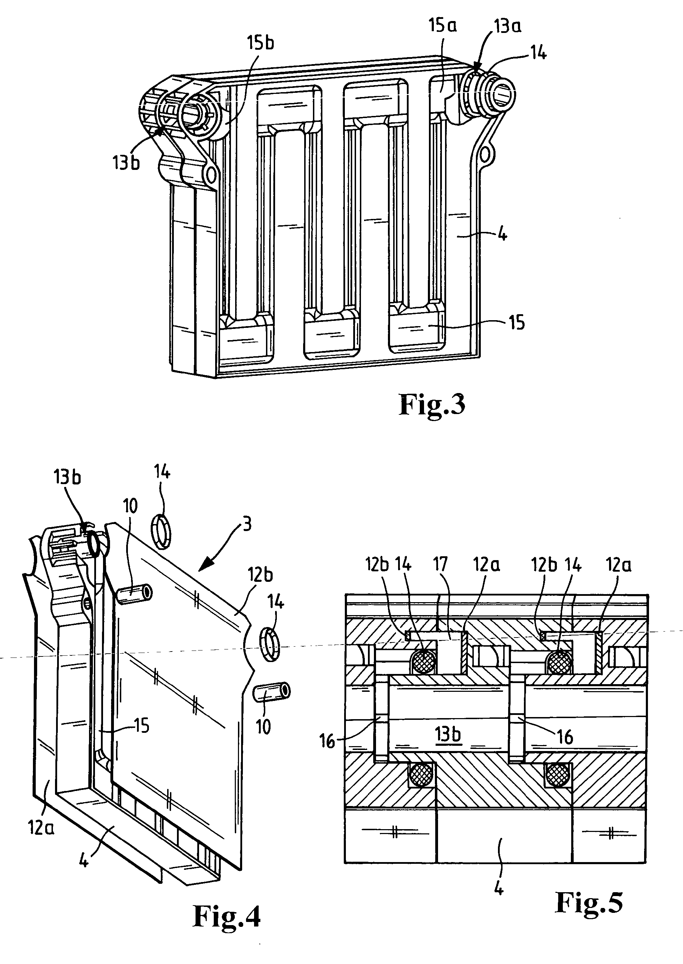

As can be gathered from Fig. 3 and Fig. 4, the frame 4 has a tubular supply conduit 13a and a tubular exhaust conduit 13b for the heat transfer fluid. The supply conduits 13a and the exhaust conduits 13b of adjacent heat transfer modules 3 are interconnected using o-rings 14 as sealing members. The interconnected supply and exhaust conduits 13a, 13b of the heat transfer modules 3 extend over the entire length of the battery assembly 1 to the entry port 6a and to the exit port 6b, respectively.

For providing the heat transfer fluid from the supply conduit 13a to the exhaust conduit 13b, a recess 15 is formed in the frame 4. As the recess 15 is covered by the metal sheet 12b (cf. Fig. 4), the recess 15, resp., the space between the recess 15 and the metal sheet 12b forms a heat transfer channel for the heat transfer fluid. It will be understood that although not explicitly shown, an identical recess which is covered by another metal sheet 12a is provided at the opposite face of the frame 4, allowing to provide the heat transfer fluid also to the battery cell 2 which is disposed adjacent to the opposite face. In the present example, the sealing between the frame 4 and the metal sheets 12a, 12b is provided by gluing. Alternatively or in addition, a gasket (not shown) may be used for the sealing, the gasket being typically overmoulded on the frame 4 and the metal sheets 12a, 12b.

For providing the heat transfer fluid from the conduits 13a, 13b to the heat transfer channels arranged at opposite faces of the frame 4, two apertures 15a, 15b are formed in the frame 4, the apertures being connected to the conduits 13a, 13b by small openings 16 which are formed in-between adjacent heat transfer modules 3, see Fig. 5. As can also be gathered from Fig. 5, an area 17 where the battery cells 2 are located is separated from the conduits 13a, 13b by the sealing rings 14.

In summary, the modular battery assembly 1 as described herein allows to make benefit of the freedom of design which is available when using plastic (moulded) parts as a frame. The use of heat transfer members in the form of flat metal sheets allows one to keep production costs low. Also, sealing between the conduits of adjacent heat transfer modules is needed only between the plastic frames 4 (and not between the metal sheets), thus requiring only a small number of gaskets between the heat transfer modules. The modular battery assembly 1 may in particular be used in electric/hybrid vehicles having a cooling and/or heating system for providing heat transfer to the battery cells 2.

## Claims

1. A heat transfer module (3) for battery cells (2), comprising:
a frame (4) of a plastics material having a supply conduit (13a) and an exhaust conduit (13b) for a heat transfer fluid,
two heat transfer members (12a, 12b) for contacting a respective battery cell (3), the heat transfer members (12a, 12b) being sealingly attached to opposite faces of the frame (4), and
at least one heat transfer channel (15) formed between the frame (4) and one of the heat transfer members (12b) for transporting the heat transfer fluid from the supply conduit (13a) to the exhaust conduit (13b).

2. Heat transfer module according to claim 1, wherein the frame (4) comprises a generally flat face to which the heat transfer member (12a, 12b) is attached, the heat transfer channel (15) being formed by a recess in the flat face of the frame (4) which is covered by the heat transfer member (12a, 12b).

3. Heat transfer module according to claim 1 or 2, wherein the heat transfer members (12a, 12b) are metal sheets.

4. Heat transfer module according to any one of the preceding claims, wherein for providing sealing attachment, the heat transfer members (12a, 12b) are glued to the plastic frame (4).

5. Heat transfer module according to any one of the preceding claims, further comprising a gasket for providing the sealing attachment of the heat transfer members (12a, 12b) to the frame (4).

6. Heat transfer module according to any one of the preceding claims, further comprising at least one sealing member (14) for providing a sealing connection of the supply conduit (13a) and the exhaust conduit (13b) to corresponding conduits of further heat transfer modules (3).

7. Heat transfer module according to claim 6, wherein the sealing member is a gasket (14), in particular an O-ring.

8. Heat transfer module according to any one of the preceding claims, wherein the frame (4) comprises at least one gap (7a, 7b) for providing an electrical connection to a battery cell (2).

9. Heat transfer module according to any one of the preceding claims, further comprising at least two alignment channels (8a, 8b) for receiving fasteners, in particular rods (9a, 9b), for interconnecting a plurality of heat transfer modules (3).

10. A battery assembly (1), comprising:
a first end module (5a) having a entry port (6a) for a heat transfer fluid,
a second end module (5b) having an exit port (6b) for the heat transfer fluid,
a plurality of heat transfer modules (3) according to any one of claims 1 to 9, and
a plurality of battery cells (2) arranged between heat transfer members (12a, 12b) of adjacent heat transfer modules (3).

11. Battery assembly according to claim 10, further comprising at least two fasteners, in particular two rods (9a, 9b), for interconnecting the heat transfer modules (3) and the end modules (5a, 5b).
